(19)

**Europäisches Patentamt**

**European Patent Office**

**Office européen des brevets**

(11) **EP 4 727 096 A1**

(12) **EUROPEAN PATENT APPLICATION**

(43) Date of publication:
**15.04.2026 Bulletin 2026/16**

(21) Application number: **25207393.7**

(22) Date of filing: **08.10.2025**

(51) International Patent Classification (IPC):
***H04L 69/22*** (2022.01)          ***H04L 12/46*** (2006.01)
***H04L 45/64*** (2022.01)

(52) Cooperative Patent Classification (CPC):
**H04L 69/22; H04L 12/4633; H04L 45/64**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **08.10.2024 US 202418909756**

(71) Applicant: **Nokia Solutions and Networks Oy
02610 Espoo (FI)**

(72) Inventor: **DUTTA, Pranjal Kumar
Sunnyvale, CA (US)**

(74) Representative: **Nokia EPO representatives
Nokia Technologies Oy
Karakaari 7
02610 Espoo (FI)**

(54) **EMBEDDED PROTOCOL OVERLAY FOR A NETWORK CONTROL PROTOCOL**

(57)     The subject disclosure introduces the concept of using an overlay protocol embedded in a network control protocol. In various embodiments, an embedded overlay protocol message can be carried as the payload in a network control protocol packet sent from one network device to another. Various embodiments provide methods and apparatus for preparing and sending a network control protocol message with an embedded overlay protocol as well as methods and apparatus for receiving and processing a network control protocol message with an embedded overlay protocol. Embodiments disclosed herein have a variety of different applications including, among other things, as a generic solution that can efficiently determine the overall, end-to-end latency of almost any network control protocol.

**Description**

**Technical Field**

Various example embodiments relate to the field of network protocols and, more particularly, to embedded protocol overlays on a network control protocol.

**Background**

Network protocols are sets of rules that define the communication of data between various devices in a network. These protocols define guidelines and conventions for transmitting and receiving data, ensuring efficient and reliable data communication. While it is possible to write a single protocol that takes data from an application on one device and sends it to an application on another device, this approach is very inflexible. Instead, the approach typically used in networking is to split up the various tasks required to communicate data by creating a variety of protocols which each perform a particular function and which can work together, typically in a layered fashion, to provide a more flexible communication framework.

Network protocols are generally configured to perform secured connections, network management, and network communication functions and, as such, are broadly classified into three major categories: network security, network OAM (operations, administration and maintenance), network control, and network communication. Very generally, network security protocols are designed to protect the confidentiality and authenticity of data as it traverses a network. They establish secure channels for communication and make sure that sensitive information is not vulnerable to interception or tampering. Network OAM protocols can be used for the administration, monitoring, and control of network devices and resources. They help network administrators configure and troubleshoot network components efficiently. Network control protocols establish channels/paths across a network for data communication. They enable network nodes to dynamically manage network resources, distribute routing information, and set up optimal loop-free paths across a network. Finally, network communication protocols enable the exchange of data and information between devices on a network. They determine how data is formatted, transmitted, and received, which ensures effective communication.

Several models exist which organize the set of network protocols used by networks according to a functional criterion. The Open Systems Interconnection (OSI) model is a 7-layer architecture with each layer having specific functionality to perform. The layers work collaboratively to transmit data from one device to another on a network. The 7-layers comprise the: Application layer, Presentation layer, Session layer, Transport layer, Network layer, Data Link layer, and Physical layer. The TCP/IP (Transport Control Protocol/Internet Protocol) model is another framework for organizing network protocols. The TCP/IP model consists of 4 layers, they are the: Application layer, Transport layer, Internet layer, and Network Access layer. In the TCP/IP model, the Application, Presentation, and Session layers of the OSI model are combined into the TCP/IP model Application layer; the TCP/IP model Transport layer corresponds to the OSI model Transport layer, the TCP/IP Internet layer corresponds to the OSI Network layer, and the Physical and Data Link layers of the OSI model are combined into the TCP/IP Network Access layer. The OSI model is a conceptual framework that is typically not fully implemented by modem protocols, whereas the TCP/IP model is a practical implementation.

A protocol suite or family is a collection of protocols that are designed to work together to allow devices to communicate with each other over a network. A protocol stack or network stack is an implementation of a networking protocol suite or protocol family. While some of these terms are used interchangeably, strictly speaking, a collection of the communication protocols is a suite, and a software implementation of the protocol suite is a stack. The approach used in networking today is to create protocol suites implemented as layered protocol stacks in which each level of the stack performs a particular function and communicates with the levels above and below it.

The Internet protocol suite, also commonly referred to as TCP/IP, is one of the most commonly used network protocol suites. The TCP/IP protocol suite consists of many protocols that operate at one of the 4 layers of the TCP/IP model. The TCP/IP protocol suite draws its name from the foundational protocols used in the suite: the Transport Control Protocol (TCP) and the Internet Protocol (IP). The TCP operates at the Transport layer and the IP operates at the TCP/IP Internet layer (OSI Network layer). TCP/IP was designed to be independent of networking hardware and should run across any connection media, one of the earliest and most common being Ethernet. Ethernet is a 2-layer protocol/standard covering the OSI Physical and Data Link layers (which corresponds to the Network Access layer in the TCP/IP model).

When two devices communicate across a network, the data must travel through various items of networking equipment. This networking equipment is commonly referred to by the OSI level in which the equipment operates. For example, a network router is an example of networking equipment that operates at the OSI Network layer and, as such, is commonly referred to as a level 3 device because the OSI Network layer is the third layer of the OSI model. Similarly, a switch, which operates at the OSI Data Link layer, is referred to as a level 2 device because the OSI Data Link layer is the second layer of the OSI model. Because a router operates at the Network layer (Internet layer of the TCP/IP model), it typically doesn't support upper layer application protocols operating in the OSI Application, Presentation, and Session layers (the TCP/IP Application layer). A router works on network addresses which are part of the Network protocol (IP in the

EP 4 727 096 A1

TCP/IP protocol suite). A router can route many different protocols at the same time, but it typically doesn't do protocol conversion. In other words, an IP packet coming in will be an IP packet going out. Likewise, a switch doesn't have OSI level 3, 4, 5, 6, or 7 protocol stacks as it doesn't need them. A switch typically doesn't care about the routing protocol or the application protocol that passes through it. Because a switch operates at OSI level 2 (the Data Link layer) it only needs to understand the MAC addresses that are part of the Ethernet protocol.

Network management is the process of administering and managing computer networks. Network administrators are typically responsible for the upkeep, configuration, and reliable operation of networks and networking equipment. Network administrators typically monitor various network performance metrics to ensure that a network is efficiently and reliably operating. Latency, as well as packet loss and jitter, are network performance metrics that can offer insights into the quality of a network connection. Latency refers to the time it takes for data packets to travel from a source to a destination. High latency can cause delays in data transmission resulting in irregular arrival intervals and increasing jitter. By monitoring and analyzing these network performance metrics, network administrators can identify and resolve performance issues, to ensure a seamless and reliable user experience.

Various tools currently exist for measuring latency. The Internal Control Message Protocol (ICMP), the One-Way Active Measurement Protocol (OWAMP), and the Two-Way Active Measurement Protocol (TWAMP) are examples of network protocols which provide network latency measurement tools. For example, ICMP, which traditionally runs atop the OSI Network layer, can be used to test Internet Protocol (IP) connectivity among two routing nodes in an IP network. In this case, a first node sends an ICMP echo request message to a second node and encodes a timestamp at the time the ICMP echo request message is dispatched. Upon receiving the ICMP echo request message, the second node sends an ICMP echo reply message back to the first node. When the first node receives the ICMP echo reply message, it can calculate the round-trip network latency by determining the difference between the time the ICMP echo request message was dispatched and the time the ICMP echo reply message was received by the first node.

However, this node-to-node latency measurement is only part of the overall, end-to-end latency experienced by a data packet because it starts and ends at both routers OSI Network layer (TCP/IP Internet layer). Many network control protocols, such as Boarder Gateway Protocol (BGP), Label Distribution Protocol (LDP), Open Shortest Path First (OSPF), Intermediate System-Intermediate System (IS-IS), Resource Reservation Protocol-Traffic Engineering (RSVP-TE), and the like, can suffer additional "host" layer latencies, such as OSI Transport, Session, Presentation, and Application layer latencies, which are left unaccounted for in a node-to-node, IP (OSI Network layer) latency measurement. As an example, BGP is a TCP based protocol and can suffer from TCP slow peering problems where a slower BGP peer may cause significant backpressure on transmission of BGP packets from another BGP peer. In this situation, the unaccounted-for "host" layer latencies may add significant overhead thus affecting the overall, end-to-end latency. In this case, the none-to-node latency may no longer be a useful measure of the overall latency in BGP protocol. Instead, a generic solution that can efficiently measure the overall, end-to-end latency of any network control protocol would be more useful.

## Summary

This section introduces aspects that may help facilitate a better understanding of the disclosure. Accordingly, the statements of this section are to be read in this light and are not to be understood as admissions about what is in the prior art or what is not in the prior art.

Example embodiments described in the subject disclosure introduce the concept of embedding an overlay protocol that traditionally runs in a first Open Systems Interconnection (OSI) layer in a network control protocol that traditionally runs in a second OSI layer different from the first OSI layer. In various embodiments, an embedded overlay protocol packet can be carried as the payload in a network control protocol message sent from one network device to another. While processing the message, the network control protocol of the receiving network device can be configured to recognize that the payload of the message is an embedded overlay protocol packet, open up an instance of the embedded overlay protocol at the second OSI layer, and use the opened instance of the embedded overlay protocol to process the embedded overlay protocol message. Because the embedded overlay protocol message is carried as part of the payload of the network control protocol message, it travels the same path and experiences the same network conditions as other network control protocol messages. As such, implementations of the network control protocol message with an embedded overlay protocol can be used in various embodiments to enable an efficient, generic mechanism for measuring various network performance metrics such as the overall, end-to-end latency of packets (including the previously unaccounted-for "host" layer latencies) in a network with precision.

Various embodiments provide methods and apparatus for preparing and sending a network control protocol message with an embedded overlay protocol for transmission across a network as well as methods and apparatus for receiving and processing a network control protocol message with an embedded overlay protocol. Some of the apparatus for preparing and sending and/or receiving and processing a network control protocol message with an embedded overlay protocol can comprise a first Internet Protocol (IP) network device operating in an IP network of IP network devices, the first IP network device configured to communicate with a second IP network device over the IP network, the first IP network

3

device and second IP network device comprising at least one processor and at least one memory including program code. The memory and the program code are configured to, with the at least one processor, cause the first and/or second IP network device to prepare and send a network control protocol message with an embedded overlay protocol and/or receive and process a network control protocol message with an embedded overlay protocol. Implementations of the various embodiments can be used for, among other things, efficiently and accurately measuring various network performance metrics such as an overall, end-to-end latency between the first and second IP network devices by using a network control protocol message with an embedded overlay protocol that has tools/commands that can be used for measuring various network performance metrics.

Various embodiments for preparing and sending a network control protocol message with an embedded overlay protocol can comprise receiving as an input an embedded overlay protocol message corresponding to the embedded overlay protocol that traditionally operates at a first Open Systems Interconnection (OSI) layer, encapsulating the embedded overlay protocol message with an overlay protocol message header to produce an embedded overlay protocol packet, preparing a network control protocol message header corresponding to a network control protocol operating at a second OSI layer that is different from the first OSI layer, encapsulating the embedded overlay protocol packet with the network control protocol message header to produce the network control protocol message with the embedded overlay protocol, and sending the network control protocol message with the embedded overlay protocol across a network. The overlay protocol message header can provide information identifying the embedded overlay protocol and the network control protocol message header can provide information indicating that a payload encapsulated by the network control protocol message header comprises the embedded overlay protocol packet.

In various embodiments, the embedded overlay protocol message header can comprise a layer field, comprising information indicative of the first OSI layer, and a protocol field, comprising information identifying the embedded overlay protocol. The network control protocol message header can comprise a type field comprising information indicating that the payload encapsulated by the network control protocol message header includes a message for the embedded overlay protocol. In one implementation, the embedded overlay protocol can be Internet Control Message Protocol (ICMP) and the embedded overlay protocol message can be an ICMP echo request message. The network control protocol can be Border Gateway Protocol (BGP). Note that in the state-of-the-art, BGP operates at the application layer of OSI model and ICMP operates at the internet layer of OSI model.

Various embodiments for receiving and processing a network control protocol message with an embedded overlay protocol (the embedded overlay protocol traditionally operating at a first Open Systems Interconnection (OSI) layer) can comprise receiving the network control protocol message with the embedded overlay protocol, the network control protocol message corresponding to a network control protocol operating at a second OSI layer that is different than the first OSI layer, removing a network control protocol header encapsulating the network control protocol message, parsing the network control protocol header for information indicating that the network control protocol message includes an embedded overlay protocol packet as a payload, upon determining that the network control protocol message includes an embedded overlay protocol packet as a payload, removing an embedded overlay protocol packet header from the embedded overlay protocol packet to produce an embedded overlay protocol message, parsing the embedded overlay protocol packet header for information identifying the embedded overlay protocol, identifying the embedded overlay protocol based on the information parsed in the embedded overlay protocol packet header, opening an instance of the embedded overlay protocol at the second OSI layer, and processing the embedded overlay protocol message based on the opened instance of the embedded overlay protocol.

The information identifying an embedded overlay protocol further can comprise a layer field, comprising information indicative of the first OSI layer, and a protocol field, comprising information identifying the embedded overlay protocol. The information indicating that the network control protocol message includes the embedded overlay protocol packet as a payload can comprise a type field comprising information indicating that embedded overlay protocol packet includes a message for the embedded overlay protocol. In one implementation, the embedded overlay protocol can be Internet Control Message Protocol (ICMP) and the embedded overlay protocol message can be an ICMP echo request message. The network control protocol can be Border Gateway Protocol (BGP).

Embodiments of the invention can be configured to operate using a variety of different network control protocols such as Border Gateway Protocol (BGP), Label Distribution Protocol (LDP), Open Shortest Path First (OSPF), Intermediate System-Intermediate System (IS-IS) or Resource Reservation Protocol-Traffic Engineering (RSVP-TE) to name a few. In addition, various different embedded overlay protocols and embedded overlay protocol messages can be used for various different implementations of the example embodiments. For example, Internet Control Message Protocol (ICMP) can be used as an embedded overlay protocol and the ICMP echo request and echo reply embedded overlay protocol messages can be used for determining the overall, end-to-end latency of network control protocol packets with precision in a generic manner for a variety of different network control protocols.

Another example embodiment can include an apparatus for preparing and/or sending a network control protocol message with an embedded overlay protocol for transmission across a network. The apparatus can comprise means for receiving as an input an embedded overlay protocol message corresponding to the embedded overlay protocol, wherein the embedded overlay protocol traditionally operates at a first Open Systems Interconnection (OSI) layer, means for encapsulating the embedded overlay protocol message with an overlay protocol message header to produce an embedded overlay protocol packet, the overlay protocol message header providing information identifying the embedded overlay protocol, means for preparing a network control protocol message header corresponding to a network control protocol operating at a second OSI layer different from the first OSI layer, the network control protocol message header providing information indicating that a payload encapsulated by the network control protocol message header comprises the embedded overlay protocol packet, means for encapsulating the embedded overlay protocol packet with the network control protocol message header to produce the network control protocol message with the embedded overlay protocol, and means for sending the network control protocol message with the embedded overlay protocol over the network to another apparatus.

In this embodiment, the embedded overlay protocol message header can further comprise a layer field comprising information indicative of the first OSI layer and a protocol field comprising information identifying the embedded overlay protocol. The network control protocol message header can further comprise a type field comprising information indicating that the payload encapsulated by the network control protocol message header includes a message for the embedded overlay protocol. In one implementation, the embedded overlay protocol can be Internet Control Message Protocol (ICMP) and the embedded overlay protocol message can be an ICMP echo request message. The network control protocol can be Border Gateway Protocol (BGP).

Another embodiment of an apparatus for receiving and/or processing a network control protocol message with an embedded overlay protocol, the embedded overlay protocol traditionally operating at a first Open System Interconnection (OSI) layer, can comprise means for receiving the network control protocol message with the embedded overlay protocol from another apparatus, the network control protocol message corresponding to a network control protocol operating at a second OSI layer that is different than the first OSI layer, means for removing a network control protocol header encapsulating the network control protocol message, means for parsing the network control protocol header for information indicating that the network control protocol message includes an embedded overlay protocol packet as a payload, upon determining that the network control protocol message includes an embedded overlay protocol packet as a payload, means for removing an embedded overlay protocol packet header from the embedded overlay protocol packet to produce an embedded overlay protocol message, means for parsing the embedded overlay protocol packet header for information identifying the embedded overlay protocol, means for identifying the embedded overlay protocol based on the information parsed in the embedded overlay protocol packet header, means for opening an instance of the embedded overlay protocol at the second OSI layer, and means for processing the embedded overlay protocol message using the opened instance of the embedded overlay protocol.

In this embodiment, the embedded overlay protocol message header can further comprise a layer field comprising information indicative of the first OSI layer and a protocol field comprising information identifying the embedded overlay protocol. The information indicating that the network control protocol message includes the embedded overlay protocol packet as the payload can further comprise a type field comprising information indicating that embedded overlay protocol packet includes a message for the embedded overlay protocol. In one implementation, the embedded overlay protocol can be Internet Control Message Protocol (ICMP) and the embedded overlay protocol message can be an ICMP echo request message. The network control protocol can be Border Gateway Protocol (BGP).

One or more of the above embodiments may be combined as desired.

The above summary provides a basic understanding of some aspects of the specification. This summary is not an extensive overview of the specification. It is intended to neither identify key or critical elements of the specification nor delineate any scope of the particular embodiments of the specification, or any scope of the claims. Its sole purpose is to present some concepts of the specification in a simplified form as a prelude to the more detailed description that is presented later.

## Description of the Drawings

Some example embodiments are now described, by way of example only, and with reference to the accompanying drawings. The same reference number represents the same element or the same type of element on all drawings.

FIG. 1 is a schematic diagram of a network depicting single-hop and multi-hop BGP sessions between routers;
FIG. 2 is a schematic diagram of two BGP peer routers in communication over a network;
FIG. 3 is a schematic diagram of two BGP peer routers in communication over a network implementing an embedded overlay protocol according to an example embodiment of the subject matter described herein;
FIG. 4 is a schematic diagram of a fixed sized header of a BGP packet;
FIG. 5 is a schematic diagram of an overlay protocol message format according to some embodiments of the disclosure;
FIG. 6 is a schematic diagram of a partially populated overlay protocol message format according to various embodiments;

FIG. 7 is a schematic diagram of a partially populated overlay protocol message format according to some embodiments described herein;

FIG. 8 is a schematic diagram of a partially populated overlay ICMP protocol message format according to embodiments of the disclosure;

FIG. 9 is a flow diagram illustrating a method for preparing and transmitting an overlay protocol embedded in a BGP packet according to an example embodiment of the subject matter described herein.

FIG. 10 is a flow diagram of a method for processing a BGP packet with an embedded overlay protocol according to another embodiment of the subject matter described herein.

## Description of Embodiments

In the following description, for purposes of explanation and not limitation, specific details are set forth, such as particular protocols, messages and message formats, networks, peering sessions, techniques, etc., in order to provide a thorough understanding of the present invention. However, it will be apparent to one skilled in the art that the present invention may be practiced in other embodiments that depart from these specific details. All statements herein reciting principles, aspects, and embodiments, as well as specific examples thereof, are intended to encompass both structural and functional equivalents thereof. Additionally, it is intended that such equivalents include both currently known equivalents as well as equivalents developed in the future.

Note that as used herein, the terms "first", "second" and so forth are not intended to imply sequential ordering, but rather are intended to distinguish one element from another, unless explicitly stated. Similarly, sequential ordering of method steps does not imply a requirement of sequential order of their execution, unless explicitly stated. The term "connected" may encompass direct connections or indirect connections through intermediate elements, unless explicitly stated otherwise.

Furthermore, the following abbreviations and acronyms may be used in the present document:

"BGP" Border Gateway Protocol
"MP-BGP Multi-Protocol Border Gateway Protocol
"iBGP" Internal (or Interior) Border Gateway Protocol
"eBGP" External (or Exterior) Border Gateway Protocol
"LDP" Label Distribution Protocol
"OSPF" Open Shortest Path First
"IS-IS" Intermediate System-Intermediate System
"RSVP-TE" Resource Reservation Protocol-Traffic Engineering
"VPN" Virtual Private Network
"MPLS" Multi-Protocol Label Switching
"LSP" Label-Switched Path
"TCP" Transport Control Protocol
"UDP" User Datagram Protocol
"IP" Internet Protocol
"IPv4" Internet Protocol version 4
"IPv6" Internet Protocol version 6
"AS" Autonomous System
"ASes" Autonomous Systems
"DC" Data Center
"Tx" Transmit
"Rx" Receive
"ICMP" Internal Control Message Protocol
"NLRI" Network Layer Reachability Information
"VPN" Virtual Private Network
"OSI" Open Systems Interconnection"
"IETF" Internet Engineering Task Force
"RFC" Request for Comments
"NTP" Network Time Protocol
"PTP" Precision Time Protocol

Embodiments described in the subject disclosure introduce the concept of using an overlay protocol embedded in a network control protocol. As described herein, various embodiments enable an efficient, generic mechanism for measuring end-to-end latency of packets in a network control protocol with precision. For example, in one embodiment, the ICMP protocol can be used as an overlay embedded in a network control protocol such as Border Gateway Protocol (BGP). ICMP packets such as echo request and echo response can be exchanged as the payloads of a BGP protocol packet. Since embedded ICMP packets share the same fate as regular BGP control protocol packets, the ICMP packets can be used to measure the various network properties, such as latency, of the BGP control protocol packets.

Various embodiments are described herein in the context of BGP as the network control protocol, however the concepts and principles of the subject disclosure can also be applied to other network control protocols such as LDP, OSPF, IS-IS and RSVP-TE to name a few. A network control protocol is sometimes also referred to as a "control plane protocol" since such protocols belong to the control plane of a node in the network.

BGP is widely used as a network control protocol to exchange routing information on the Internet, especially between autonomous systems (ASes). BGP has been extended to exchange any network layer reachability information (NLRI), such as to set-up different types of layer-3, layer-2 VPNs, MPLS LSPs, etc.

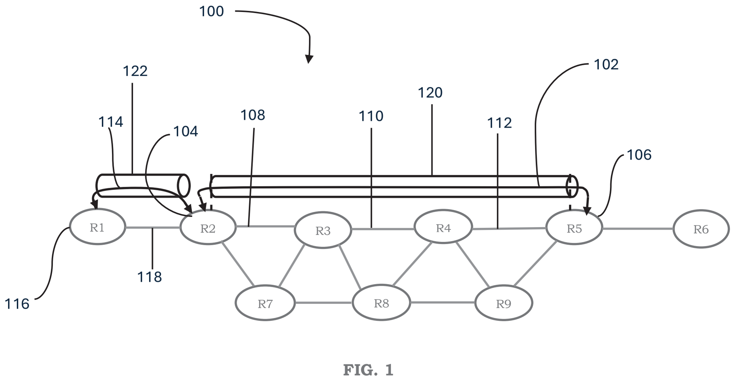

Referring now to Fig. 1, an exemplary BGP network 100 is illustrated showing several sample BGP peering sessions. BGP peering between a pair of IP network devices, such as BGP routers, is called a BGP session. A typical router comprises at least one processor and at least one memory including program code. The memory and program code with the processor are configured to cause the router to operate as described by the program code. The program code can be in the form of an algorithm which, when executed by the memory and processor, causes the router to perform the various functions of the method described by the algorithm.

Peering BGP routers can be connected directly or through multiple hops as described herein. Figure 1 illustrates:

- a first BGP peering session 102 between two routers R2 104 and R5 106, separated by multiple hops 108, 110, 112; and
- a second BGP peering session 114 between routers R1 116 and R2 104 across a directly connected link 118.

A BGP session (102, 114) typically runs in the OSI "host" layers (i.e. the Application, Presentation, and Session layers) atop the OSI Transport Layer. Transport Control Protocol (TCP) is an OSI Transport Layer protocol that provides a lossless, reliable, in order delivery channel for BGP messages in a session. To create a BGP session (102, 114), first, the peering BGP routers (R2 104/R5 106, R1 116/R2 104) make a TCP connection (120, 122) by creating a TCP session on port 179. Port 179 indicates BGP as the application atop TCP. Once the TCP connection (120, 122) is operational, the peering BGP routers (R2 104/R5 106, R1 116/R2 104) establish the BGP session (102, 114) over the TCP connection (120, 122). After a BGP session (102, 114) is established, the peering routers (R2 104/R5 106, R1 116/R2 104) can exchange any reachability information (as messages) over the BGP session (102, 114). A BGP router (104, 116) sends 19-byte keep-alive messages every 60 seconds to maintain the session (102, 114).

A BGP session between two routers in the same autonomous system (AS) is referred to as Internal BGP (iBGP or Interior Border Gateway Protocol). A BGP session between routers in different autonomous systems is called External BGP (eBGP or Exterior Border Gateway Protocol). Although BGP was introduced as an exterior gateway protocol to exchange routing information among ASes, it is now heavily deployed in large scale data centers (DCs) such as a control plane for virtualized network overlays etc.

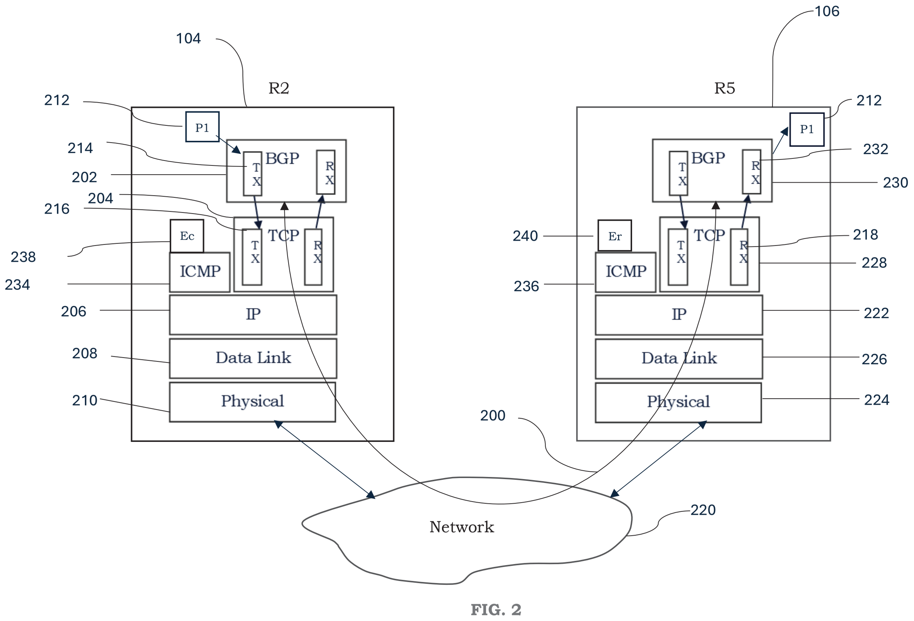

Fig. 2 illustrates an overview of how BGP packets are exchanged in a peering session 200 between routers R2 104 and R5 106. BGP 202, 230 uses TCP 204, 228 as the Transport layer protocol which, in turn, runs atop the OSI Network Layer protocol which, in the example embodiment, is Internet Protocol (IP) 206, 222. IP (IPv4 or IPv6) 206, 222 runs atop an OSI Data Link layer protocol 208, 226 such as Ethernet. The Physical layer 210, 224 provides the physical media to transport Ethernet frames. TCP is a reliable, connection oriented, byte-streaming protocol.

In the example BGP peering session 200 illustrated in Fig. 2, router (R2) 104 generates a BGP packet (P1) 212 to be sent to router (R5) 106. The exchange of packet P1 212 involves at least the following sequence:

- At the beginning of the exchange timeline, router (R2) 104 may enqueue packet (P1) 212 into its BGP internal transmit queue 214. This queue may be needed if the TCP transmit queue 216 is full. The TCP transmit queue 216 may be full if router (R5) 106 reduces the TCP window size to near zero. Router (R5) 106 may do so if its TCP receiving queue 218 is full. The (R5) TCP receiving queue 218 may be full if BGP 230 in router (R5) 106 does not process packets at least as fast as router (R2) 104 sends BGP packets 212 to router (R5) 106. (It should be noted that the transmit and receive queue pair in both BGP and TCP stacks are per peering session.)
- After a delay/latency of L-bgp-tx, packet (P1) 212 is dequeued from the BGP transmit queue 214 and inserted into the TCP transmit queue 216.
- After a delay/latency of L-tcp-tx, packet (P1) 212 is dispatched by router (R2) TCP 204 to router (R2) IP 206.
- Eventually, the packet (P1) 212 is transmitted from router (R2) 104 to router (R5) 106 via the network 220. The packet (P1) 212 travels through the network 220, arrives at (R5) IP 222, and is enqueued at router (R5) TCP receive queue 218 after a delay/latency L-ip-tx

- After a delay/latency of L-tcp-rx, packet (P1) 212 is dequeued from TCP receiving queue 218 by BGP 230 in router (R5) 106. BGP 230 may further enqueue the packet (P1) 212 to router (R5) BGP receiving queue 232.
- After a delay/latency of L-bgp-rx, packet (P1) 212 is finally processed by BGP 230 in router (R5) 106.

In this example, the total delay/latency for packet (P1) 212 in the exchange (Lp1-total) is:

$$Lp1\text{-}total = L\text{-}bgp\text{-}tx + L\text{-}tcp\text{-}tx + L\text{-}ip\text{-}tx + L\text{-}tcp\text{-}rx + L\text{-}bgp\text{-}rx$$

The Internet Control Message Protocol (ICMP) may be used to test IP connectivity among two routing nodes. ICMP 234, 236 usually runs atop the IP 206, 222 (the OSI Network layer protocol), as shown in Fig. 2. Referring to Fig. 2, ICMP echo request and echo reply messages can be used to test connectivity and network latency between router (R2) 104 and router (R5) 106. For example, router (R2) 104 can send an ICMP echo request message (Ec) 238 to router (R5) 106. A timestamp (T1) can be encoded at router (R2) 104 recording the time ICMP echo request message (Ec) 238 is dispatched. When router (R5) 106 receives the ICMP echo request message (Ec) 238, router (R5) 106 sends an ICMP echo reply message (Er) 240 back to router (R2) 104. When router (R2) ICMP 234 receives and processes the ICMP echo reply message (Er) 240 at time (T3), it can calculate the round-trip network latency as the difference between T3 and T1 and the one-way network latency as (T3-T1)/2.

However, because ICMP 234, 236 runs atop the OSI Network layer (IP 206, 222), the calculated one-way network latency only accounts for L-ip-tx and not the TCP (L-tcp-tx + L-tcp-tx) and BGP (L-bgp-rx + L-bgp-rx) portions of the total latency for BGP packet (P1) 212. As described above, when TCP slow peering problems arise, such as when router (R5) 106 causes backpressure on transmission of BGP packets from router (R2) 104, the BGP and TCP ("host" layer) portions of the total latency may significantly affect the total latency. The same deficiency can apply to other network control protocols, such as LDP, OSPF, IS-IS, RSVP-TE, etc. As such, a generic solution that can measure the total, end-to-end latency of any network control protocol could be useful.

Example embodiments described herein introduce the concept of embedding an overlay protocol in the network control protocol such that packets of the embedded overlay protocol follow the same path and suffer the same fate as the control protocol packets of the network control protocol. As such, by embedding ICMP as the overlay protocol and using the ICMP echo request and echo replay messages of the embedded ICMP overlay protocol, it is possible to measure the total, end-to-end latency of network control protocol packets with precision. Furthermore, this concept can be applied to almost any network control protocol, making it a generic mechanism to measure the total, end-to-end latency of almost any network control protocol.

For example, using the BGP peering session described above with respect to Fig. 2, instead of using the ICMP protocol 234, 236 running atop the IP layer 208, 222, a version of the ICMP protocol can be embedded in the network control protocol BGP as an overlay protocol. In this example, ICMP packets, such as the echo request and echo response, can be exchanged as payloads of a BGP packet. As such, the BGP packets carry the embedded ICMP packets and are exchanged between routers (R2) 104 and (R5) 106 in the same manner as regular BGP control protocol packets. Using the ICMP features described above with respect to Fig. 2, latency measurements based on the embedded ICMP packets will account for the BGP and TCP ("host") portions of the total, end-to-end latency of BGP control protocol packets. In this way, it becomes possible to easily and accurately measure the total, end-to-end latency of BGP packets. Alternatively, the ICMP protocol can be embedded into other network control protocols such as LDP, OSPF, IS-IS, RSVP-TE, to name a few, to easily and accurately measure the total, end-to-end latency of any of these other network control protocols, making it a generic mechanism for measuring the total, end-to-end latency of almost any network control protocol.

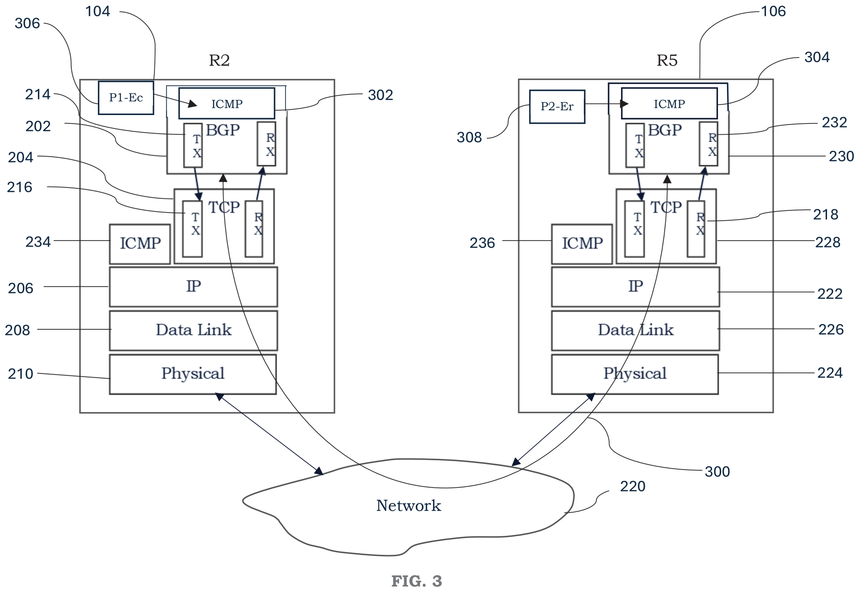

Referring now to Fig. 3, another example of a BGP peering session 300 between routers (R2) 104 and (R5) 106 is illustrated. Like the BGP peering session 200 shown in Fig. 2, BGP 202, 230 in peering session 300 use TCP 204, 228 as the Transport layer protocol which, in turn, runs atop the IP layer (IPv4 or IPv6) 206, 222. IP 206, 222 runs atop Data Link layers 208, 226 such as Ethernet. Physical layers 210, 224 provides the physical media to transport Ethernet frames. However, in this example, BGP peering session 300 is configured to calculate the total, end-to-end latency according to an example embodiment.

In BGP peering session 300, the BGP protocol 202, 230 of each, router (R2) 104 and (R5) 106, includes an embedded instance of the ICMP protocol 302, 304. In this embodiment, an embedded ICMP packet is sent and received as payload of a BGP packet such that the embedded ICMP packet travels across the same route and experiences the same delays/latencies as any other BGP packet exchanged between routers (R2) 104 and (R5) 106. Various embodiments can use BGP-ICMP-echo (P1-Ec) 306 to denote the ICMP echo request message embedded inside a BGP packet and BGP-ICMP-echo-reply (P2-Er) 308 to denote the ICMP echo reply message embedded inside a BGP packet. Following a sequence similar to the one shown in Fig. 2 for the exchange of a BGP packet between routers (R2) 104 and (R5) 106, router (R2) generates a BGP-ICMP-echo request message (P1-Ec) 306 to router (R5) 106. The exchange of BGP-ICMP-echo request message (P1-Ec) 306 involves at the following sequence:

- At the beginning of the exchange timeline, router (R2) 104 may enqueue BGP-ICMP-echo request message (P1-Ec) 306 into its BGP internal transmit queue 214.
- After a delay/latency of L-bgp-tx, BGP-ICMP-echo request message (P1-Ec) 306 is dequeued from the BGP transmit queue 214 and inserted into the TCP transmit queue 216.
- After a delay/latency of L-tcp-tx, BGP-ICMP-echo request message (P1-Ec) 306 is dispatched by router (R2) TCP 204 with the embedded BGP-ICMP-echo request message (P1-Ec) 306 configured as an IP packet.
- The IP packet, including the embedded BGP-ICMP-echo request message (P1-Ec) 306, is transmitted from router (R2) 104 to router (R5) 106 via the network 220. Eventually, the BGP-ICMP-echo request message (P1-Ec) 306 reaches the (R5) IP layer 222. The total propagation delay of the IP packet from router (R2) 104 to router (R5) is L-ip-tx.
- Upon reaching the (R5) IP layer 222, the BGP-ICMP-echo request message (P1-Ec) 306 is enqueued to the (R5) TCP receive queue 218.
- After a delay/latency of L-tcp-rx, the BGP-ICMP-echo request message (P1-Ec) 306 is dequeued from TCP receiving queue 218 by router (R5) BGP 230. BGP 230 may further enqueue BGP-ICMP-echo request message (P1-Ec) 306 to the (R5) internal BGP receiving queue 232.
- After a delay/latency of L-bgp-rx, BGP-ICMP-echo request message (P1-Ec) 306 is processed by router (R5) BGP protocol 230. While processing the BGP-ICMP-echo request message (P1-Ec) 306, BGP 230 finds that the payload of the BGP-ICMP-echo request message (P1-Ec) 306 is an ICMP echo request message, so the BGP 230 hands over the payload ICMP echo request message to the instance of the ICMP protocol 304 embedded in BGP 230 at time T2.

In this exchange, the total delay/latency for the BGP-ICMP-echo request message (P1-Ec) 306 (L-P1-Ec-total) is: $L\text{-}P1\text{-}Ec\text{-}total = L\text{-}bgp\text{-}tx + L\text{-}tcp\text{-}tx + L\text{-}ip\text{-}tx + L\text{-}tcp\text{-}rx + L\text{-}bgp\text{-}rx,$ which is the same as L-bgp (i.e. the latency of any other BGP packet sent from R2 to R5).

Continuing the exchange, (R5) embedded ICMP instance 304, generates a BGP-ICMP-echo-reply message (P2-Er) 308 in response to the received BGP-ICMP-echo request message (P1-Ec) 306. BGP-ICMP-echo-reply message (P2-Er) 308 is an ICMP echo reply message embedded as the payload inside a BGP packet P2. The BGP-ICMP-echo-reply message (P2-Er) 308 is dispatched to router (R2) 104 in the reverse manner as BGP-ICMP-echo-message (P1-Ec) 306 was transmitted from router (R2) 104 to router (R5) 106.

Eventually, (R2) BGP 202 receives and processes the BGP-ICMP-echo-reply message (P2-Er) 308. While processing the BGP-ICMP-echo-reply message (P2-Er) 308, (R2) BGP 202 finds that the message payload is an ICMP echo reply packet, so it hands over the payload to the embedded instance of the ICMP protocol 302 at time T3. The embedded ICMP protocol instance 302 can then compute a round trip BGP peering latency (RTLbgp) as the difference between T3 and T1. The approximate latency of a BGP packet from router (R2) 104 to router (R5) 106 can be calculated as: L-bgp= (T3-T1)/2 which is nearly the same as the one-way latency of a BGP packet from router (R2) 104 to router (R5) 106.

In another example embodiment, (R5) embedded ICMP protocol instance 304 may be enhanced to encode the timestamp (T2) of receipt of the BGP-ICMP-echo request message (P1-Ec) 306 by router (R5) 106 into the BGP-ICMP-echo-reply message (P2-Er) 308. In this embodiment, both router (R2) 104 and router (R5) 106 should be time synchronized, possibly using time synchronization protocols such as NTP, PTP, and the like, in order for timestamp (T2) to be most useful for accurately calculating the one-way latency of a BGP packet sent from router (R2) 104 to router (R5) 106. However, even without routers (R2) 104 and (R5) 106 being time synchronized, the approximate latency calculated by dividing the round-trip latency of a BGP packet (RTLbgp=T3-T1) from router (R2) 104 to router (R5) 106 by 2 is usually a very accurate approximation of the one-way latency of a BGP packet sent from router (R2) 104 to router (R5) 106.

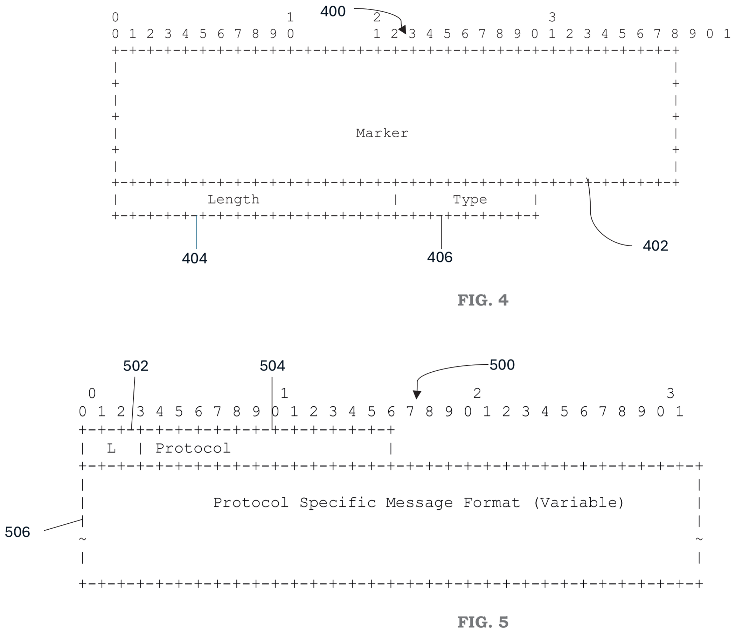

Figs. 4-8 illustrate various embodiments of embedding an overlay protocol message inside of a BGP packet. As shown in Fig. 4, a BGP message has a fixed-size header 400. There may or may not be a data portion following the header, depending on the message type. The various fields of the header 400 can include a marker field 402, a length field 404, and a type field 406. The marker field 402 can be a 16-octet field included for compatibility and it is usually set to all ones. The length field 404 can be a 2-octet unsigned integer indicating the total length of the message, including the header, in octets and it can be used to locate the marker field of the next message in the TCP stream. The value of the length field 404 should be at least 19 and usually no greater than 4096 and may be constrained depending on the message type. "Padding" of extra data after the message is usually not allowed, therefore, the length field 404 usually has the smallest value required, given the rest of the message. The type field 406 can be a 1-octet unsigned integer indicating a type code for the message. Conventionally, BGP messages fall into one of 5 different message types:

1. OPEN

2. UPDATE

3. NOTIFICATION

4. KEEPALIVE

5. ROUTE-REFRESH

The remaining values in the type field 406 are reserved for new message types. Example embodiments propose introducing a new BGP message type, termed "OVERLAY_PROTOCOL." This new message type can be assigned one of the values reserved for new message types. For the purposes of this disclosure, we'll assign the "OVERLAY_PROTOCOL" message type value 6, but it is easily understood by a person skilled in the art that any available message type value could be assigned to this new message type. Message type "OVERLAY_PROTOCOL" indicates that the payload of the message (i.e. the data following the fixed header) includes messages for another protocol.

One example embodiment of the format of an "OVERLAY_PROTOCOL" message that can be sent as the payload following the fixed-sized BGP header 400 is illustrated in Fig. 5. As shown in Fig. 5, this embodiment of an "OVERLAY_PROTOCOL" message 500 includes a Layer field (L) 502, a Protocol field 504, and a Protocol Specific Message Format field 506. The Layer field (L) 502 can be 3-bits and can indicate the level at which the embedded overlay protocol traditionally operates. For example, in the embodiment illustrated in Fig. 5, the Layer field (L) 502 could be set to "0" to indicate that the embedded protocol is a standard protocol that traditionally operates atop the OSI Data Link layer (such as Ethernet) or it could be set to "1" to indicate that the embedded overlay protocol is a standard protocol that traditionally operates atop the OSI Network layer. The Protocol field 504 can be variable in length and can be configured to encode an value indicative of the protocol type that is embedded in the message 500. The Protocol Specific Message Format field 506 can be variable in length and can be used to provide protocol specific information which would depend on the value encoded in the Protocol field 504.

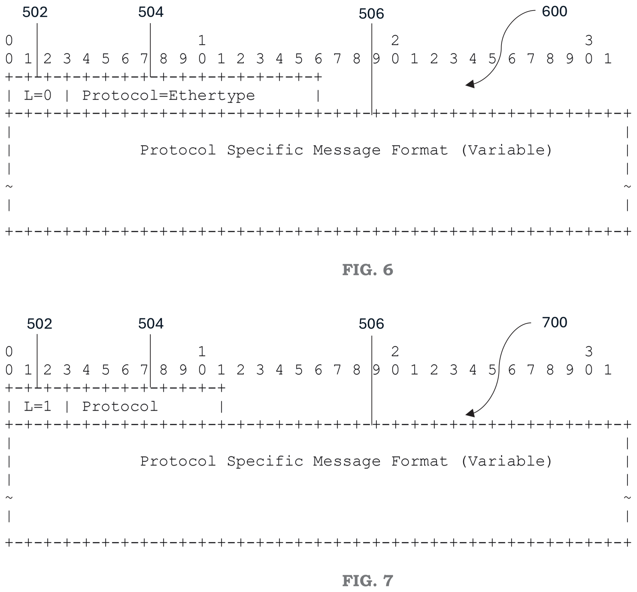

Fig. 6 is an example embodiment of an "OVERLAY_PROTOCOL" message 600 with the layer field (L) 502 value set to "0" to indicate that the embedded overlay protocol is traditionally run atop the OSI Data Link layer such as Ethernet. In this embodiment, the Protocol field 504 is a 16-bit field that encodes a standard Ethertype value. For example, the Protocol field 504 can be set to 0x0800 to indicate that the messages are IPv4 packets or set to 0x86dd to indicate that the messages are IPv6 packets.

Fig. 7 is an example embodiment of an "OVERLAY PROTOCOL" message 700 with the layer field (L) 502 value set to "1" to indicate that the embedded protocol is traditionally run atop the OSI Network level. In this embodiment, the Protocol field 504 is an 8-bit field that encodes a protocol ID indicative of the specific embedded overlay IP level protocol. For example, the Protocol field 504 can be set to "1" to indicate that the messages are ICMP packets, set to "6" to indicate that the messages are TCP packets, or set to 17 to indicate that the messages are UDP packets.

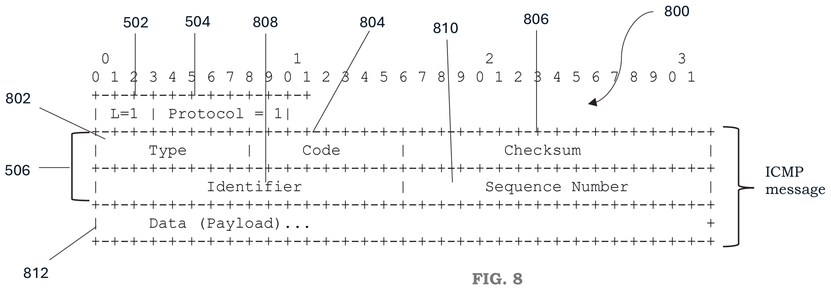

In one example embodiment, the embedded overlay protocol can be set to ICMP and the ICMP echo request and echo reply messages can be used for measuring the end-to-end latency of the network. Fig. 8 is one example embodiment of an ICMP "OVERLAY_PROTOCOL" message 800 in which an ICMP packet is embedded in the payload of a BGP packet. As illustrated in Fig. 8, the layer field (L) 502 value is set to "1" to indicate that the embedded overlay protocol, ICMP in this case, is traditionally run atop the OSI Network layer (in this example the OSI Network layer protocol being Internet Protocol) and the Protocol field 504 is set to "1" to indicate that the messages are ICMP packets. In this embodiment, the Protocol Specific Message Format field 506 includes 5 fields containing information specific to ICMP messages. The "Type" field 802 is an 8-bit field that indicates the type of ICMP message being sent. It provides a brief description of the message so that the receiving network device knows what kind of message it is receiving and how to respond to it. It can be set to "8" for an ICMP echo request message for IPv4 or "128" for an ICMP echo request message for IPv6. The "Type" field can be set to "0" for an ICMP echo reply message for IPv4 or "129" for an ICMP echo request message for IPv6. Several other common ICMP message types are:

- "3" - Destination unreachable
- "5" - Redirect Message
- "11" - Time Exceeded
- "12" - Parameter problem
- "13" - Timestamp Message
- "14" - Timestamp Reply Message

The "Code" field 804 is an 8-bit field that carries some additional information about the error message and type. In the example embodiment shown in Fig. 8, the "Code" field 804 is set to "0" for both ICMP echo request and echo reply type messages. The next field is a 16-bit "Checksum" field 806. The "Checksum" field 806 is the 16 bit one's complement of the one's complement sum of the ICMP message starting with the ICMP "Type" field 802. For computing the checksum, the "Checksum" field 804 should be zero. If the total length is odd, the received data is padded with one octet of zeros for computing the checksum. This checksum may be replaced in the future. The "identifier" and "sequence number" fields 808, 810 comprise the rest of the ICMP header. Together, they form a 4-byte field the contents of which varies based on the ICMP "Type" 802 and "Code" 804. In the example embodiment shown in Fig. 8, since the ICMP "Type" field 802 is set to either "8" or "128"for an echo request message or "0" or "129" for an echo reply message and the "Code" field is set to "0", both the "identifier" field 808 and the "sequence number" field 810 include an identifier to aid in matching ICMP echo requests and ICMP echo replies. Finally, following the fields comprising the Protocol Specific Message Format field 506, any ICMP data specific to the ICMP message type can be transmitted in the payload "Data" field 812. In a similar manner, ICMP or other overlay protocol messages may be embedded with other network control protocols such as LDP, OSPF, IS-IS, RSVP-TE, to name a few.

A standard tool that implements ICMP echo request and echo reply messaging to measure the round-trip time (RTT) latency in an IP network is Packet Inter-Network Groper "ping". The ping tool is typically executed from the command line of a router as shown below:

```
router # ping 135.227.208.147
PING 135.227.208.147 (135.227.208.147) 56(84) bytes of data.
64 bytes from 135.227.208.147; icmp_seq=1 ttl=64 time=0.021 ms
64 bytes from 135.227.208.147; icmp_seq=2 ttl=64 time=0.020 ms
64 bytes from 135.227.208.147; icmp_seq=3 ttl=64 time=0.018 ms
../../
--- 135.227.208.147 ping statistics ---
3 packets transmitted, 3 received. 0% pack loss, time 2072ms
rtt min/ave/max/mdev = 0.018/0.019/0.021/0.001 ms
```

In this example, 135.277.208.147 is the IPv4 address of a destination router in the IP network which corresponds to router (R5) 106 in Fig. 1. When an instance of ICMP is embedded as the payload inside a BGP message, such as in the example embodiment described above, the ping utility runs inside BGP and the BGP-ICMP-echo and BGP-ICMP-echo-reply can be implemented as shown below:

```
router# enter bgp
router->bgp # ping 135.227.208.170
PING 135.227.208.170 (135.227.208.170) 56(84) bytes of data.
64 bytes from 135.227.208.170; icmp_seq=1 ttl=64 time=0.053 ms
64 bytes from 135.227.208.170; icmp_seq=2 ttl=64 time=0.057 ms
64 bytes from 135.227.208.170; icmp_seq=3 ttl=64 time=0.051 ms
64 bytes from 135.227.208.170; icmp_seq=4 ttl=64 time=0.052 ms
64 bytes from 135.227.208.170; icmp_seq=5 ttl=64 time=0.050 ms
64 bytes from 135.227.208.170; icmp_seq=6 ttl=64 time=0.052 ms
64 bytes from 135.227.208.170; icmp_seq=7 ttl=64 time=0.048 ms
--- 135.227.208.170 ping statistics ---
7 packets transmitted, 7 received. 0% pack loss, time 6171ms
rtt min/ave/max/mdev = 0.048/0.051/0.057/0.009 ms
```

In this example, 135.227.208.170 is a IPv4 loopback address of a destination BGP peer instance. For example, it could be the address of a BGP peer instance in router (R5) 106 and in that case the command is executed in the BGP instance of router (R2) 104.

In addition to the example embodiment described above, other tools and/or other embedded overlay protocols can be used to perform network latency measurements and/or other network administration tasks. For example, the ICMP timestamp and timestamp reply messages can be used to measure latency if the source and destination routers are time synchronized. Alternatively, OWAMP and/or TWAMP could be used as the embedded overlay protocol to measure network latency with an OWAMP-Test message or a TWAMP-Test message embedded as the payload in a BGP message. These, as well as numerous other, embedded overlay protocols and network management tools can be implemented as various example embodiments using the inventive concepts disclosed herein.

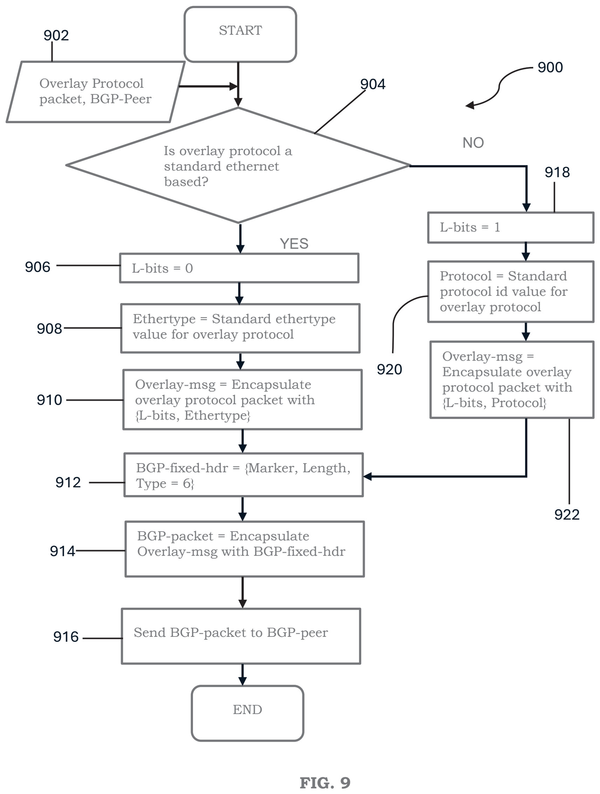

Turning now to Fig. 9, an example embodiment of a method implemented by BGP to transmit an overlay protocol packet 900 is illustrated. Inputs to the method include an overlay protocol packet and the BGP peer to which the packet is to be sent 902. At step 904, a check is performed to determine whether or not the overlay protocol to be embedded is a standard ethernet based protocol (e.g. IPv4, IPv6, and the like) that runs atop the Data Link layer.

If it is, the layer field (L) 502 in the message header is encoded with a value of "0" (Step 906) which is indicative of an embedded overlay protocol operating atop the Data Link layer. As described above, when the embedded overlay protocol operates atop the Data Link layer, the Protocol field 504 is 16-bits in length and is encoded with the Ethertype value. As such, the next step (Step 908) is to determine the standard Ethertype value of the embedded overlay protocol. Again, as described above, two possible standard Ethertype values that can be encoded into the Protocol field 504 are: 0x0800 to indicate that the overlay protocol packet is an IPv4 packet or 0X86dd to indicate that the overlay protocol packet is an IPv6 packet. Once the Ethertype value has been determined, the embedded overlay protocol packet is encapsulated with the BGP overlay message header (Step 910) which includes the encoded layer field (L) 502, which is "0" in this case, and Ethertype value.

After that, the BGP message fixed-size header, including the marker 402, length 404, and type 406 fields is assembled in Step 912. As described with regards to Fig. 4, the marker field 402 is a 16-octet field that is set to all ones. The length field 404 is a 2-octet unsigned integer indicating the total length of the message, including the header and the type field 406 is a 1-octet unsigned integer indicating the type code of the message. In the embodiment described above, the embedded overlay protocol message is a new type of message, so it was assigned one of the type field values reserved for new message types, in this case "6".

Once the BGP message fixed-size header is assembled, the BGP overlay message is encapsulated with the assembled BGP fixed-size header in step 914 to form a completed BGP embedded overlay packet and the completed BGP overlay packet is sent to the intended BGP peer in step 916.

If it is determined, in Step 904, that the overlay protocol to be embedded is not a standard ethernet based protocol, it is assumed that the overlay protocol to be embedded is a standard protocol that traditionally operates atop the IP layer. In this case, the layer field (L) 502 in the message header is encoded with a value of "1" (Step 918) which is indicative of an embedded overlay protocol operating atop the IP layer. As described above, when the embedded overlay protocol operates atop the IP layer, the Protocol field 504 is 8-bits in length and is encoded with the standard protocol ID value. As such, the next step (Step 920) is to determine the standard protocol ID value of the embedded overlay protocol. Again, as described above, three well known protocol ID values that can be encoded into the Protocol field 504 are: "1" to indicate that the embedded overlay protocol packet is an ICMP packet, "6" to indicated that the embedded overlay protocol packet is a TCP packet, or "17" to indicate that the embedded overlay protocol packet is an UDP packet. In the embodiment described above in which an ICMP echo request message is being used to determine the overall, end-to-end latency of a BGP packet, the Protocol value will be set to "1" to indicate that the embedded overlay protocol is ICMP. The embedded overlay protocol packet inputted in step 902 will include the remaining fields of the ICMP echo request message in which the "Type" field 802 will be set to "8" to indicated that the ICMP message is an ICMP echo request message, the "Code" field 804 will be set to "0", the "Checksum" field 806 will be set to the 16-bit one's complement of the one's complement sum of the ICMP message, the "identifier" field 808 will be set to "0", and the "sequence number" field 810 will be set to "0". The embedded overlay protocol packet is then encapsulated with the BGP overlay message header (Step 922) which includes the encoded layer field (L) 502, which is "1" in this case, and Protocol value, which is "1" in this case.

After that, the BGP message fixed-size header is assembled in Step 912 with the type field 406 encoded with a type number reserved for new types of messages, such as "6" in the example embodiment to indicate that this is an embedded overlay protocol message, the BGP overlay message is encapsulated with the assembled BGP fixed-size header in step 914 to form a completed BGP overlay packet, and the completed BGP overlay packet is sent to the intended BGP peer in step 916.

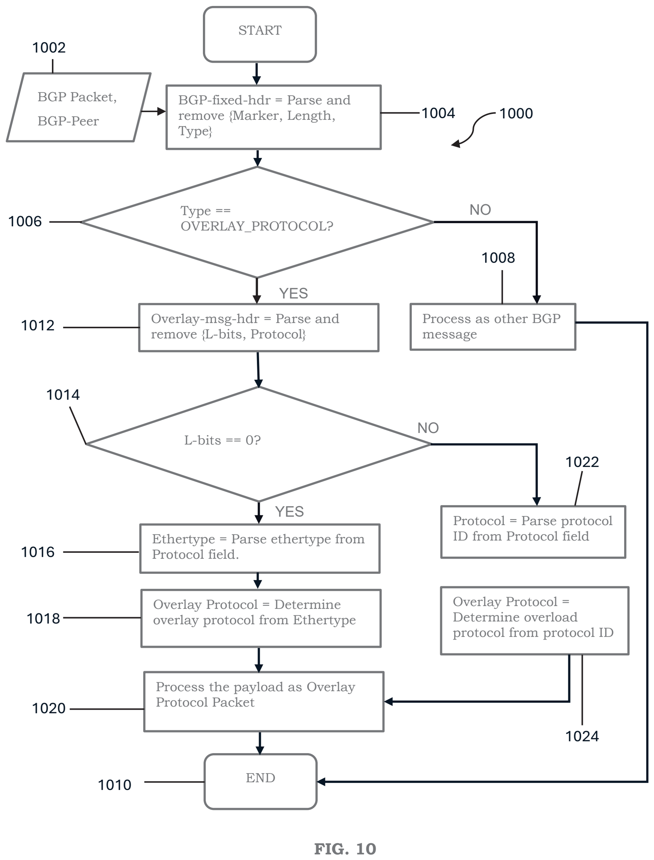

Turning now to Fig. 10, a method for processing an overlay protocol embedded in a BGP message 1000 is illustrated. Inputs to the method include the BGP message with embedded overlay protocol and the identity of the BGP peer that sent the BGP message 1002. Upon receiving the BGP message, it is parsed and the BGP fixed header is removed in step 1004. At step 1006, it is determined whether or not the BGP message is an embedded overlay protocol message by checking the type field 406 of the BGP fixed header. If it is determined that the BGP message is not an embedded overlay protocol message, the BGP message is processed like any other BGP message in step 1008 and the method terminates in step 1010.

If it is determined that the BGP message is an embedded overlay protocol message (in the embodiment described herein the type field 406 is "6"), the BGP overlay message header is parsed and removed in step 1012. Next, in step 1014, the method evaluates the BGP overlay message header layer field (L) 502 to determine whether or not the embedded overlay protocol traditionally runs atop the Data Link layer or the IP layer.

If the Layer field (L) 502 is "0", that is indicative of an embedded overlay protocol that traditionally runs atop the Data Link layer so the method parses the BGP overlay message header Protocol field 504 in step 1016 identifying the 16-bit Ethertype value encoded in the Protocol field 504 and determines the embedded overlay protocol (IPv4, IPv6, etc.) from the Ethertype value in step 1018. Finally, the method processes the message payload as the determined embedded overlay protocol packet in step 1020 and the method terminates in step 1010.

If the Layer field (L) 502 is "1", that is indicative of an embedded overlay protocol that traditionally runs atop the IP layer so the method parses the BGP overlay message header Protocol field 504 as an 8-bit protocol ID value in step 1022. Next, the method determines the embedded overlay protocol based on the 8-bit protocol ID value in step 1024. In the embodiment described herein used for determining the overall, end-to-end latency of a BGP packet, the protocol ID value is "1" indicating that the embedded overlay protocol is ICMP. Next, the message payload is processed as an ICMP message in step 1020. In doing so, the method will parse the ICMP message "Type" field 802 to determine the type of embedded overlay protocol message. In the embodiment described herein, the ICMP "Type" field 802 will be an "8", which is indicative of an ICMP echo request message. The method will then process the BGP packet as an ICMP echo request message.

Restating the methods for sending and processing an embedded overlay protocol BGP message for the embodiment described herein which can be used to determine the overall, end-to-end latency of a BGP packet. The overlay ICMP packet (ICMP Message 506) and the BGP peer to which the packet is to be sent (router (R5) 106) is provided as input to originating BGP peer, router (R2) 104, in step 902. Input ICMP Message 506 includes a type field 802 encoded with an "8" and a code field 804 encoded with a "0" to indicate that the input ICMP message 506 is an echo request message. The checksum field 806 is encoded with the 16-bit one's complement of the one's complement sum of the input ICMP message 506 starting with the type field 502. The identifier field 808 and sequence number field 810 are both 16-bit fields sometimes shown divided into a Big Endian (BE) value and a Little Endian (LE) value. These fields 808, 810 are encoded with values used to link an echo request packet (from router (R2) 104) to an echo reply packet (from router (R5) 106). For the purposes of the illustrated embodiment, the input identifier field 808 and sequence number field 810 are encoded with the following:

Identifier (BE): 20731 (0x50ffb)
Identifier (LE): 64336 (0xfb50)
Sequence number (BE): 0 (0x0000)
Sequence number (LE): 0 (0x0000)

During step 904, it is determined that the input embedded overlay protocol packet is ICMP which traditionally runs atop the IP layer so the process of building the BGP overlay message header for an embedded overlay protocol that is not a standard ethernet based protocol begins. In step 918, the layer field (L) 502 in the BGP overlay message header is set to a value of "1" to indicate that the input embedded overlay protocol packet is not a standard ethernet based protocol and in step 920, the Protocol field 504 in the BGP overlay message header is set to a value of "1" to indicate that the embedded overlay protocol is ICMP. Once the layer field (L) 502 and Protocol field 504 have been encoded, the ICMP message 506 is encapsulated in the BGP overlay message header in step 922 to form the ICMP "OVERLAY_PROTOCOL" message 800.

After that, the BGP message fixed-size header 400, including the marker 402, length 404, and type 406 fields is assembled in Step 912. As previously described, the marker field 402 is set to all ones, the length field 404 is set to reflect the total length of the message, including the header, and the type field 406 is encoded with a type number reserved for new types of messages, such as "6" in the embodiment described herein, to indicate that the payload of the BGP message includes a message for another protocol (i.e. it isn't one of the original 5 BGP message types, instead it is a "new" message type). Once the BGP message fixed-size header 400 is assembled, the ICMP "OVERLAY_PROTOCOL" message 800 is encapsulated with the assembled BGP fixed-size header 400 in step 914 to form a completed BGP-ICMP-echo request message (P1-Ec) 306.

The completed BGP-ICMP echo request message (P1-Ec) 306 is sent from router (R2) 104 to the router (R5) 106 in step 916. At the same time, a timestamp (T1) is encoded at router (R2) 104 recording the time the BGP-ICMP echo request message (P1-Ec) 306 is dispatched. The BGP-ICMP echo request message (P1-Ec) 306 travels through the network 220 until it reaches its destination, router (R5) 106. Once the BGP-ICMP echo request message (P1-Ec) 306 reaches router (R5) 106, it is processed as follows.

The BGP-ICMP echo request message (P1-Ec) 306 and identity of the sending BGP peer, router (R2) 104, are delivered as inputs to router (R5) 106 in step 1002. Upon receiving the BGP-ICMP echo request message (P1-Ec) 306, router (R5) 106 parses it and removes the BGP fixed size header 400 in step 1004. By examining the type field 406 of the BGP fixed sized header 400, which is encoded with the value "6", it is determined that the BGP-ICMP echo request message (P1-Ec) 306 is of the type OVERLAY_PROTOCOL so processing moves on to step 1012. In step 1012, the BGP overlay message header, including the Layer field (L) 502 and Protocol field 504, is parsed and removed. Next, in step 1014, it is determined that the value "1" is encoded in the layer field (L) 502, signifying that the embedded overlay protocol traditionally runs atop the IP layer, so processing moves on to step 1022. In step 1022, by parsing the Protocol field 504, it is determined that it is encoded with the value "1". In step 1024, it is determined that the value "1" encoded in the Protocol field 504 signifies that the embedded overlay protocol is ICMP.

In step 1020, the remaining portion of the message, the ICMP message 506, is processed as an ICMP message. As part of that processing, the type field 802, which is encoded with the value "8", and the code field 804, which is encoded with the value "0", are parsed and, based on their encoded values, the router (R5) 106 determines that the ICMP message 506 is an ICMP echo request. In another embodiment, upon determining that the ICMP message 506 is an ICMP echo request, a timestamp (T2) is encoded at router (R5) 106 recording the time the BGP-ICMP echo request message (P1-Ec) 306 is processed. This timestamp (T2) can be sent back to router (R2) 104 so that router (R2) 104 can determine the overall, end-to-end latency of a BGP packet as the difference between T2 and T1. However, in the embodiment currently being described, router (R5) 106 instead begins the process of responding with an ICMP echo reply message.

The process of responding to the ICMP echo request message from router (R2) 104 begins by supplying an embedded overlay protocol packet (ICMP Message 506 in the form of an ICMP echo reply message) and the BGP peer to which the packet is to be sent (router (R2) 104) as input to router (R5) 106 in step 902. The input ICMP Message 506 includes a type field 802 encoded with a "0" and a code field 804 encoded with a "0" to indicate that the input ICMP message 506 is an ICMP echo reply message. The checksum field 806 is encoded with the 16-bit one's complement of the one's complement sum of the input ICMP message 506 starting with the type field 502. The identifier field 808 and sequence number field 810 are both encoded with values used to link the echo reply packet to the echo request packet received from router (R2) 104. In order to do so, the input identifier field 808 and sequence number field 810 are encoded with the same values as those encoded in the echo request message received from router (R2) 104, namely:

    Identifier (BE): 20731 (0x50ffb)
    Identifier (LE): 64336 (0xfb50)
    Sequence number (BE): 0 (0x0000)
    Sequence number (LE): 0 (0x0000)

During step 904, it is determined that the input embedded overlay protocol packet is ICMP which traditionally runs atop the IP layer so the process of building the BGP overlay message header for an embedded overlay protocol that is not a standard ethernet based protocol begins. In step 918, the layer field (L) 502 in the BGP overlay message header is set to a value of "1" to indicate that the input embedded overlay protocol packet is not a standard ethernet based protocol and in step 920, the Protocol field 504 in the BGP overlay message header is set to a value of "1" to indicate that the embedded overlay protocol is ICMP. Once the Layer field (L) 502 and Protocol field 504 have been encoded, the ICMP message 506 is encapsulated in the BGP overlay message header in step 922 to form the ICMP "OVERLAY_PROTOCOL" message 800.

After that, the BGP message fixed-size header 400, including the marker 402, length 404, and type 406 fields is assembled in Step 912. As previously described, the marker field 402 is set to all ones, the length field 404 is set to reflect the total length of the message, including the header, and the type field 406 is encoded with a type number reserved for new types of messages, such as "6" in the embodiment described herein, to indicate that the payload of the BGP message includes a message for another protocol (i.e. it isn't one of the original 5 BGP message types, instead it is a "new" message type). Once the BGP message fixed-size header 400 is assembled, the ICMP "OVERLAY_PROTOCOL" message 800 is encapsulated with the assembled BGP fixed-size header 400 in step 914 to form a completed BGP-ICMP-echo reply message (P2-Er) 308. The completed BGP-ICMP echo reply message (P2-Er) 308 is sent from router (R5) 106 to the router (R2) 104 in step 916.

The completed BGP-ICMP echo reply message (P2-Er) 308 travels across the network 220 until it reaches router (R2) 104. Upon receiving the BGP-ICMP echo reply message (P2-Er) 308, router (R2) 104 begins processing the message as follows.

The BGP-ICMP echo reply message (P2-Er) 308 and identity of the sending BGP peer, router (R5) 106, are delivered as inputs to receiving router (R2) 104 in step 1002. Upon receiving the BGP-ICMP echo reply message (P2-Er) 308, router (R2)104 parses it and removes the BGP fixed size header 400 in step 1004. By examining the type field 406 of the BGP fixed sized header 400, which is encoded with the value "6", it is determined that the BGP-ICMP echo reply message (P2-Er) 308 is of the type OVERLAY_PROTOCOL so processing moves on to step 1012. In step 1012, the BGP overlay message header, including the Layer field (L) 502 and Protocol field 504, is parsed and removed. Next, in step 1014, it is determined that the value "1" is encoded in the layer field (L) 502, signifying that the embedded overlay protocol traditionally runs atop the IP layer, so processing moves on to step 1022. In step 1022, by parsing the Protocol field 504, it is determined that it is encoded with the value "1". In step 1024, it is determined that the value "1" encoded in the Protocol field 504 signifies that the embedded overlay protocol is ICMP.

In step 1020, the remaining portion of the message, the ICMP message 506, is processed as an ICMP message. As part of that processing, the type field 802, which is encoded with the value "0", and the code field 804, which is encoded with the value "0", are parsed and, based on their encoded values, the router (R2) 104 determines that the ICMP message 506 is an ICMP echo reply. Upon determining that the ICMP message 506 is an ICMP reply, a timestamp (T3) is encoded at router (R2) 104 recording the time the BGP-ICMP echo reply message (P2-Er) 308 is processed. Next, the identifier field 808 and sequence number field 810 are parsed and their values are compared to values of the identifier field 808 and sequence number field 810 of the ICMP echo request message sent earlier by router (R2) 104 to match the reply to the request. Once the reply and request messages have been matched, router (R2) 104 can calculate the overall, end-to-end delay/latency as (T3-T1)/2.

While this disclosure includes references to illustrative embodiments, this specification is not intended to be construed in a limiting sense. Various modifications of the described embodiments, as well as other embodiments within the scope of the disclosure, which are apparent to persons skilled in the art to which the disclosure pertains are deemed to lie within the principle and scope of the disclosure, e.g., as expressed in the following claims. Unless explicitly stated otherwise, each numerical value and range should be interpreted as being approximate as if the word "about" or "approximately" preceded the value or range.

It will be further understood that various changes in the details, materials, and arrangements of the parts which have been described and illustrated in order to explain the nature of this disclosure may be made by those skilled in the art without departing from the scope of the disclosure, e.g., as expressed in the following claims.

The use of figure numbers and/or figure reference labels is intended to identify one or more possible embodiments of the claimed subject matter in order to facilitate the interpretation of the claims. Such use is not to be construed as necessarily limiting the scope of those claims to the embodiments shown in the corresponding figures.

Although the elements in the following method claims, if any, are recited in a particular sequence with corresponding labeling, unless the claim recitations otherwise imply a particular sequence for implementing some or all of those elements, those elements are not necessarily intended to be limited to being implemented in that particular sequence.

Reference herein to "one embodiment" or "an embodiment" means that a particular feature, structure, or characteristic described in connection with the embodiment can be included in at least one embodiment of the disclosure. The appearances of the phrase "in one embodiment" in various places in the specification are not necessarily all referring to the same embodiment, nor are separate or alternative embodiments necessarily mutually exclusive of other embodiments. The same applies to the term "implementation."

Unless otherwise specified herein, the use of the ordinal adjectives "first," "second," "third," etc., to refer to an object of a plurality of like objects merely indicates that different instances of such like objects are being referred to, and is not intended to imply that the like objects so referred-to have to be in a corresponding order or sequence, either temporally, spatially, in ranking, or in any other manner.

Unless otherwise specified herein, in addition to its plain meaning, the conjunction "if" may also or alternatively be construed to mean "when" or "upon" or "in response to determining" or "in response to detecting," which construal may depend on the corresponding specific context. For example, the phrase "if it is determined" or "if [a stated condition] is detected" may be construed to mean "upon determining" or "in response to determining" or "upon detecting [the stated condition or event]" or "in response to detecting [the stated condition or event]."

The described embodiments are to be considered in all respects as only illustrative and not restrictive. In particular, the scope of the disclosure is indicated by the appended claims rather than by the description and figures herein. All changes that come within the meaning and range of equivalency of the claims are to be embraced within their scope.

The description and drawings merely illustrate the principles of the disclosure. It will thus be appreciated that those of ordinary skill in the art will be able to devise various arrangements that, although not explicitly described or shown herein, embody the principles of the disclosure and are included within its spirit and scope. Furthermore, all examples recited herein are principally intended expressly to be only for pedagogical purposes to aid the reader in understanding the principles of the disclosure and the concepts contributed by the inventor(s) to furthering the art, and are to be construed as being without limitation to such specifically recited examples and conditions. Moreover, all statements herein reciting principles, aspects, and embodiments of the disclosure, as well as specific examples thereof, are intended to encompass equivalents thereof.

The functions of the various elements shown in the figures, including any functional blocks labeled as "processors" and/or "controllers," may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included.

It should be appreciated by those of ordinary skill in the art that any block diagrams herein represent conceptual views of illustrative elements embodying the principles of the disclosure. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. A method for preparing a network control protocol message with an embedded overlay protocol for transmission across a network, the method comprising:

receiving as an input an embedded overlay protocol message corresponding to the embedded overlay protocol, wherein the embedded overlay protocol traditionally operates at a first Open Systems Interconnection (OSI) layer;
encapsulating the embedded overlay protocol message with an overlay protocol message header to produce an embedded overlay protocol packet, the overlay protocol message header providing information identifying the embedded overlay protocol;

preparing a network control protocol message header corresponding to a network control protocol operating at a second OSI layer different from the first OSI layer, the network control protocol message header providing information indicating that a payload encapsulated by the network control protocol message header comprises the embedded overlay protocol packet; and

encapsulating the embedded overlay protocol packet with the network control protocol message header to produce the network control protocol message with the embedded overlay protocol.

2. The method of claim 1, wherein the embedded overlay protocol message header further comprises a layer field comprising information indicative of the first OSI layer and a protocol field comprising information identifying the embedded overlay protocol.

3. The method of claim 1, wherein the network control protocol message header further comprises a type field comprising information indicating that the payload encapsulated by the network control protocol message header includes a message for the embedded overlay protocol.

4. The method of claim 1, wherein the network control protocol is Border Gateway Protocol (BGP).

5. An apparatus comprising means for performing the method of any of claims 1 to 4.

6. A method for processing a network control protocol message with an embedded overlay protocol, the embedded overlay protocol traditionally operating at a first Open Systems Interconnection (OSI) layer, the method comprising:

receiving the network control protocol message with the embedded overlay protocol, the network control protocol message corresponding to a network control protocol operating at a second OSI layer that is different than the first OSI layer;

removing a network control protocol header encapsulating the network control protocol message;

parsing the network control protocol header for information indicating that the network control protocol message includes an embedded overlay protocol packet as a payload;

upon determining that the network control protocol message includes the embedded overlay protocol packet as a payload, removing an embedded overlay protocol packet header from the embedded overlay protocol packet to produce an embedded overlay protocol message;

parsing the embedded overlay protocol packet header for information identifying the embedded overlay protocol;

identifying the embedded overlay protocol based on the information parsed in the embedded overlay protocol packet header;

opening an instance of the embedded overlay protocol at the second OSI layer; and

processing the embedded overlay protocol message using the opened instance of the embedded overlay protocol.

7. The method of claim 6, wherein the information identifying the embedded overlay protocol further comprises a layer field comprising information indicative of the first OSI layer and a protocol field comprising information identifying the embedded overlay protocol.

8. The method claim 6, wherein the information indicating that the network control protocol message includes the embedded overlay protocol packet as the payload further comprises a type field comprising information indicating that the embedded overlay protocol packet includes a message for the embedded overlay protocol.

9. The method of claim 6, wherein the network control protocol is Border Gateway Protocol (BGP).

10. An apparatus comprising means for performing the method of any of claims 6 to 9.

11. A method for communicating across a network using a network control protocol messages with an embedded overlay protocol, the method comprising:

at a sending network device:

receiving as an input an embedded overlay protocol message corresponding to the embedded overlay protocol, wherein the embedded overlay protocol traditionally operates at a first Open Systems Interconnection (OSI) layer;

encapsulating the embedded overlay protocol message with an overlay protocol message header to produce an embedded overlay protocol packet, the overlay protocol message header providing information identifying the embedded overlay protocol;

preparing a network control protocol message header corresponding to a network control protocol operating at a second OSI layer different from the first OSI layer, the network control protocol message header providing information indicating that a payload encapsulated by the network control protocol message header comprises the embedded overlay protocol packet;

encapsulating the embedded overlay protocol packet with the network control protocol message header to produce the network control protocol message with the embedded overlay protocol;

sending the network control protocol message with the embedded overlay protocol from the sending network device over the network to a receiving network device;

at the receiving network device:

receiving the sent network control protocol message with the embedded overlay protocol;

removing the network control protocol header from received network control protocol message with the embedded overlay protocol;

parsing the network control protocol header for information indicating that the network control protocol message with the embedded overlay protocol includes the embedded overlay protocol packet as a payload;

upon determining that the received network control protocol message with the embedded overlay protocol includes the embedded overlay protocol packet as a payload, removing the embedded overlay protocol packet header from the embedded overlay protocol packet to produce an embedded overlay protocol message;

parsing the embedded overlay protocol packet header for information identifying the embedded overlay protocol;

identifying the embedded overlay protocol based on the information parsed in the embedded overlay protocol packet header;

opening an instance of the embedded overlay protocol at the second OSI layer; and processing the embedded overlay protocol message using the opened instance of the embedded overlay protocol.

12. The method of claim 11, wherein the information identifying the embedded overlay protocol further comprises a layer field comprising information indicative of the first OSI layer and a protocol field comprising information identifying the embedded overlay protocol.

13. The method of claim 11, wherein the information indicating that the network control protocol message includes the embedded overlay protocol packet as the payload further comprises a type field comprising information indicating that the embedded overlay protocol packet includes a message for the embedded overlay protocol.

14. The method of claim 11, wherein the network control protocol is Border Gateway Protocol (BGP).

15. The method of claim 11, further comprising:

in response to the received network control protocol message with the embedded overlay protocol;
at the receiving network element:

determining a response to the embedded overlay protocol message;

preparing a response embedded overlay protocol message corresponding to the embedded overlay protocol, wherein the embedded overlay protocol traditionally operates at the first Open Systems Interconnection (OSI) layer;

encapsulating the response embedded overlay protocol message with a response overlay protocol message header to produce a response embedded overlay protocol packet, the response overlay protocol message header providing information identifying the embedded overlay protocol;

preparing a response network control protocol message header corresponding to the network control protocol operating at the second OSI layer different, the response network control protocol message header providing information indicating that a payload encapsulated by the response network control protocol message header comprises the response embedded overlay protocol packet;

encapsulating the response embedded overlay protocol packet with the response network control protocol message header to produce the response network control protocol message with the embedded overlay protocol;

sending the response network control protocol message with the embedded overlay protocol from the receiving network device over the network to a sending network device.

FIG. 1

FIG. 2

FIG. 3

```
 0                   1          400      2                   3
 0 1 2 3 4 5 6 7 8 9 0         1 2 3 4 5 6 7 8 9 0 1 2 3 4 5 6 7 8 9 0 1
+-+-+-+-+-+-+-+-+-+-+-+-+-+-+-+-+-+-+-+-+-+-+-+-+-+-+-+-+-+-+-+
|                                                             |
+                                                             +
|                                                             |
+                                                             +
|                          Marker                             |
+                                                             +
|                                                             |
+-+-+-+-+-+-+-+-+-+-+-+-+-+-+-+-+-+-+-+-+-+-+-+-+-+-+-+-+-+-+-+
|              Length               |       Type      |
+-+-+-+-+-+-+-+-+-+-+-+-+-+-+-+-+-+-+-+-+-+-+-+-+
        404                             406              402
```

**FIG. 4**

```
      502            504                  500
 0              1                   2                   3
 0 1 2 3 4 5 6 7 8 9 0 1 2 3 4 5 6 7 8 9 0 1 2 3 4 5 6 7 8 9 0 1
+-+-+-+-+-+-+-+-+-+-+-+-+-+-+-+-+
| L | Protocol           |
+-+-+-+-+-+-+-+-+-+-+-+-+-+-+-+-+-+-+-+-+-+-+-+-+-+-+-+-+-+-+-+
|                                                             |
|              Protocol Specific Message Format (Variable)    |
506                                                           |
~                                                             ~
|                                                             |
+-+-+-+-+-+-+-+-+-+-+-+-+-+-+-+-+-+-+-+-+-+-+-+-+-+-+-+-+-+-+-+
```

**FIG. 5**

EP 4 727 096 A1

```
        502                  504                            506                         600
0                            1                             2                           3
0 1 2 3 4 5 6 7 8 9 0 1 2 3 4 5 6 7 8 9 0 1 2 3 4 5 6 7 8 9 0 1
+-+-+-+-+-+-+-+-+-+-+-+-+-+-+-+-+-+-+-+-+
| L=0 | Protocol=Ethertype        |
+-+-+-+-+-+-+-+-+-+-+-+-+-+-+-+-+-+-+-+-+-+-+-+-+-+-+-+-+-+-+-+-+
|                                                              |
|           Protocol Specific Message Format (Variable)        |
|                                                              |
~                                                              ~
|                                                              |
+-+-+-+-+-+-+-+-+-+-+-+-+-+-+-+-+-+-+-+-+-+-+-+-+-+-+-+-+-+-+-+-+
```

**FIG. 6**

```
        502                  504                            506                         700
0                            1                             2                           3
0 1 2 3 4 5 6 7 8 9 0 1 2 3 4 5 6 7 8 9 0 1 2 3 4 5 6 7 8 9 0 1
+-+-+-+-+-+-+-+-+-+-+-+
| L=1 | Protocol        |
+-+-+-+-+-+-+-+-+-+-+-+-+-+-+-+-+-+-+-+-+-+-+-+-+-+-+-+-+-+-+-+-+
|                                                              |
|           Protocol Specific Message Format (Variable)        |
|                                                              |
~                                                              ~
|                                                              |
+-+-+-+-+-+-+-+-+-+-+-+-+-+-+-+-+-+-+-+-+-+-+-+-+-+-+-+-+-+-+-+-+
```

**FIG. 7**

EP 4 727 096 A1

FIG. 8

FIG. 9

FIG. 10

# EUROPEAN SEARCH REPORT

**Application Number**

EP 25 20 7393

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Medved J ET AL: "Internet Engineering Task Force (IETF) H. Gredler, Ed. Request for Comments: 7752 Individual Contributor Category: Standards Track", , 1 March 2016 (2016-03-01), XP093335293, Retrieved from the Internet: URL:https://www.rfc-editor.org/rfc/pdfrfc/rfc7752.txt.pdf | 1-5 | INV.<br>H04L69/22<br>H04L12/46<br>H04L45/64 |
| A | * sections 1 - 3 *<br>----- | 6-15 | |
| | | | **TECHNICAL FIELDS SEARCHED (IPC)**<br><br>H04L |

The present search report has been drawn up for all claims

| Place of search | Date of completion of the search | Examiner |
|---|---|---|
| The Hague | 23 December 2025 | Gioè, Pietro |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)